# EUROPÄISCHE PATENTANMELDUNG

(11) **EP 4 015 133 A1**
(43) Veröffentlichungstag der Anmeldung: **22.06.2022**
(21) Anmeldenummer: 20214032.3
(22) Anmeldetag: 15.12.2020
(51) Int. Cl.: B23K 11/30, B23Q 1/00, B25J 15/04

(54) **ELEKTRODENKAPPENBEHANDLUNGSVORRICHTUNG UND VERFAHREN ZUM BETREIBEN EINER SOLCHEN VORRICHTUNG**

(71) Anmelder: Lutz Precision, K.S., 84104 Bratislava (SK)
(72) Erfinder: Sperber, Rudolf, Bratislava 841 04 (SK)
(74) Vertreter: Grünecker Patent- und Rechtsanwälte PartG mbB

(57) **Zusammenfassung**

Die Erfindung betrifft eine Elektrodenkappenbehandlungsvorrichtung (1) umfassend eine Andockstation (2), die ortsfest angeordnet werden kann, mit einer ersten Andockvorrichtung (5), eine Elektrodenkappenbehandlungseinheit (3) mit einer zweiten Andockvorrichtung (6) und einem ersten Verriegelungsmechanismus (7). Die Elektrodenkappenbehandlungseinheit (3) ist ausgebildet, Elektrodenkappen (12) zu fräsen und/oder auszutauschen. Die erste Andockvorrichtung (5) und die zweite Andockvorrichtung (6) sind komplementär ausgebildet und ermöglichen ein Andocken und Abdocken der Elektrodenkappenbehandlungseinheit (3) an die und von der Andockstation (2). Der erste Verriegelungsmechanismus (7) ist ausgebildet, ein Verriegeln und Entriegeln der Elektrodenkappenbehandlungseinheit (3) mit und von einer Greifvorrichtung (4), die mit einem zweiten Verriegelungsmechanismus (8) ausgestattet ist, zu ermöglichen, wofür der erste und der zweite Verriegelungsmechanismus (7, 8) komplementär ausgebildet sind. Weiter betrifft die Erfindung ein Verfahren zum Betreiben einer solchen Elektrodenkappenbehandlungsvorrichtung (1).

## Beschreibung

Die Erfindung betrifft eine Elektrodenkappenbehandlungsvorrichtung gemäß Anspruch 1 und ein Verfahren zum Betreiben einer Elektrodenkappenbehandlungsvorrichtung gemäß Anspruch 12.

### Stand der Technik

Elektrodenkappenfräsvorrichtungen und Vorrichtungen zum Austauschen von Elektrodenkappen sind bekannt, insbesondere aus dem Bereich der Automobilindustrie.

### Aufgabe

Die Aufgabe der Erfindung besteht darin, eine Elektrodenkappenbehandlungsvorrichtung und ein Verfahren zum Betreiben der Elektrodenkappenbehandlungsvorrichtung zur Verfügung zu stellen, wodurch das Fräsen und/oder Austauschen von Elektrodenkappen flexibler anwendbar ist.

### Lösung

Diese Aufgabe wird gelöst durch die Elektrodenkappenbehandlungsvorrichtung nach Anspruch 1 und das Verfahren zum Betreiben der Elektrodenkappenbehandlungsvorrichtung nach Anspruch 12. Weitere Merkmale der Erfindung sind in den abhängigen Ansprüchen offenbart.

Die Elektrodenkappenbehandlungsvorrichtung umfasst eine Andockstation, die ortsfest angeordnet werden kann, mit einer ersten Andockvorrichtung und eine Elektrodenkappenbehandlungseinheit mit einer zweiten Andockvorrichtung und einem ersten Verriegelungsmechanismus. Die Elektrodenkappenbehandlungseinheit ist ausgebildet, Elektrodenkappen zu fräsen und/oder Elektrodenkappen auszutauschen. Die erste Andockvorrichtung und die zweite Andockvorrichtung sind komplementär ausgebildet und ermöglichen ein Andocken und Abdocken der Elektrodenkappenbehandlungseinheit an die und von der Andockstation. Der erste Verriegelungsmechanismus ist ausgebildet, ein Verriegeln und Entriegeln der Elektrodenkappenbehandlungseinheit mit und von einer Greifvorrichtung, die mit einem zweiten Verriegelungsmechanismus ausgestattet ist, zu ermöglichen, wofür der erste und der zweite Verriegelungsmechanismus komplementär ausgebildet sind.

Beispielsweise kann eine Greifvorrichtung mit einem austauschbaren zweiten Verriegelungsmechanismus ausgestattet sein, so dass eine Greifvorrichtung entsprechend zu einem in der Elektrodenkappenbehandlungsvorrichtung vorhandenen ersten Verriegelungsmechanismus anpassbar ist.

Die Greifvorrichtung kann Teil der Elektrodenkappenbehandlungsvorrichtung sein oder die Greifvorrichtung kann nicht Teil der Elektrodenkappenbehandlungsvorrichtung sein.

Es kann vorgesehen sein, dass die Elektrodenkappenbehandlungsvorrichtung den zweiten Verriegelungsmechanismus umfasst, der dann an eine unabhängig von der Elektrodenkappenbehandlungsvorrichtung bereitgestellte Greifvorrichtung anbringbar ausgebildet ist.

Die Andockstation kann eine elektrische Ausstattung und eine pneumatische Ausstattung zum Betreiben der Elektrodenkappenbehandlungseinheit umfassen. Da die Andockstation nicht bewegt werden soll, kann es vorteilhaft sein, wenn die elektrische Ausstattung und die pneumatische Ausstattung zum Betreiben der Elektrodenkappenbehandlungseinheit von der Andockstation umfasst werden und nicht von der Elektrodenkappenbehandlungseinheit.

Die elektrische Ausstattung und die pneumatische Ausstattung können die Andockstation und die Elektrodenkappenbehandlungseinheit flexibel miteinander verbinden. Die Elektrodenkappenbehandlungseinheit kann relativ zu der Andockstation bewegt werden, ohne dass die elektrische Ausstattung und/oder die pneumatische Ausstattung eine derartige Bewegung stören.

Die pneumatische Ausstattung kann einen Druckluftschlauch umfassen, wobei beispielsweise der Druckluftschlauch in einem Schutzschlauch angeordnet sein kann. Der Druckluftschlauch kann einen Spanbehälter der Andockstation und eine Spanansaugeinheit der Elektrodenkappenbehandlungseinheit verbinden.

Die elektrische Ausstattung kann ein Elektrokabel umfassen, wobei beispielsweise das Elektrokabel in einem Schutzschlauch angeordnet sein kann. Das Elektrokabel kann eine Vorrichtung zur Bereitstellung von Elektrizität der Andockstation mit einem Elektromotor der Elektrodenkappenbehandlungseinheit verbinden.

Die Andockstation kann einen Spanbehälter umfassen. Der Spanbehälter kann zur Aufnahme von durch die Elektrodenkappenbehandlungseinheit von Elektrodenkappen abgefräste Späne vorgesehen sein.

Die Elektrodenkappenbehandlungseinheit kann einen Elektromotor und/oder eine Fräseinheit und/oder eine Spanansaugeinheit und/oder eine Elektrodenkappenaustauscheinheit und/oder ein Elektrodenkappenmagazin umfassen. Der Elektromotor kann zum Betreiben von Komponenten der Elektrodenkappenbehandlungseinheit, wie beispielsweise Fräseinheit, Spanansaugeinheit, Elektrodenkappenaustauscheinheit, Elektrodenkappenmagazin, vorgesehen sein. Mit der Fräseinheit können Späne von Elektrodenkappen abgefräst werden. Die Spanansaugeinheit kann die abgefrästen Späne ansaugen und beispielsweise zu einem Spanbehälter der Andockstation überführen. Mit der Elektrodenkappenaustauscheinheit können Elektrodenkappen ausgetauscht werden. Durch das Elektrodenkappenmagazin können Elektrodenkappen für einen Austausch bereitgestellt werden.

Die erste Andockvorrichtung kann als ein Pin oder als mehre Pins und die zweite Andockvorrichtung kann als entsprechend eine Durchgangsbohrung oder als entsprechend mehre Durchgangsbohrungen ausgebildet sein. In die eine/mehreren und durch die eine/mehreren Durchgangsbohrungen hindurch kann die erste Andockvorrichtung eingebracht bzw. aus der/den Bohrungen ausgebracht werden.

Alternativ kann die erste Andockvorrichtung als eine Durchgangsbohrung oder als mehre Durchgangsbohrungen und die zweite Andockvorrichtung kann als entsprechend ein Pin oder als entsprechend mehre Pins ausgebildet sein. In die eine/mehreren und durch die eine/mehreren Durchgangsbohrungen hindurch kann die zweite Andockvorrichtung eingebracht bzw. aus der/den Bohrungen ausgebracht werden.

Der erste Verriegelungsmechanismus kann einen beweglichen Pin und der zweite Verriegelungsmechanismus kann eine entsprechende Durchgangsbohrung umfassen, wobei beispielsweise der erste Verriegelungsmechanismus weiter mindestens eine Platte mit einer Durchgangsbohrung umfassen kann, durch die hindurch der bewegliche Pin bewegbar sein kann, wobei beispielsweise der bewegliche Pin mittels eines Pneumatikzylinders antreibbar sein kann. Für eine Verriegelung kann der erste Verriegelungsmechanismus beispielsweise zusätzlich arretiert werden.

Der zweite Verriegelungsmechanismus kann mindestens einen Sensor umfassen.

Die Elektrodenkappenbehandlungsvorrichtung kann weiter die Greifvorrichtung umfassen. Die Greifvorrichtung kann neben dem zweiten Verriegelungsmechanismus eine Greifstruktur umfassen, an der eine Platte mit dem zweiten Verriegelungsmechanismus angeordnet sein kann. Die Greifvorrichtung kann von einem Greiforgan eines Industrieroboters ergriffen werden oder permanent mit ihm, beispielsweise fest, aber lösbar, verbunden sein. Beispielsweise kann die Greifvorrichtung mit einem austauschbaren zweiten Verriegelungsmechanismus ausgestattet sein, so dass eine Greifvorrichtung entsprechend zu einem in der Elektrodenkappenbehandlungsvorrichtung vorhandenen ersten Verriegelungsmechanismus anpassbar ist.

Ein Verfahren zum Betreiben einer Elektrodenkappenbehandlungsvorrichtung wie oben oder weiter unten beschrieben ist vorgesehen.

Die die Greifvorrichtung kann entlang einer ersten Bewegungsrichtung in eine Verbindungsposition verbracht werden, wobei dadurch der zweite Verriegelungsmechanismus derart in die in einem angedockten Zustand auf der Andockstation befindliche Elektrodenkappenbehandlungseinheit eingebracht werden kann, dass ein anschließendes Verriegeln der Greifvorrichtung mit der Elektrodenkappenbehandlungseinheit mittels des ersten Verriegelungsmechanismus' und des zweiten Verriegelungsmechanismus' ausführbar sein kann. Ein Verriegeln des ersten und zweiten Verriegelungsmechanismus', und damit der Elektrodenkappenbehandlungseinheit und der Greifvorrichtung, kann durch ein Verbringen des ersten Verriegelungsmechanismus' entlang einer zweiten Bewegungsrichtung erfolgen.

Die erste Bewegungsrichtung kann horizontal und die zweite Bewegungsrichtung kann vertikal nach unten ausgerichtet sein. Die Elektrodenkappenbehandlungseinheit kann in den angedockten Zustand in einem vorausgegangenen Prozessschritt mittels der Greifvorrichtung verbracht worden sein. Es kann auch sein, dass die Elektrodenkappenbehandlungseinheit in den angedockten Zustand durch eine Bedienperson verbracht wurde.

Die miteinander verriegelte Elektrodenkappenbehandlungseinheit und Greifvorrichtung können von der Andockstation durch ein Verbringen in eine dritte Bewegungsrichtung abgedockt werden und anschließend kann eine Verwendung der Elektrodenkappenbehandlungseinheit zum Fräsen und/oder Auszutauschen von Elektrodenkappen stattfinden.

Die dritte Bewegungsrichtung kann vertikal nach oben ausgerichtet sein.

Danach können die miteinander verriegelte Elektrodenkappenbehandlungseinheit und die Greifvorrichtung kann durch ein Verbringen in eine vierte Bewegungsrichtung auf der Andockstation angedockt werden, wobei der erste und zweite Verriegelungsmechanismus durch ein Bewegen des ersten Verriegelungsmechanismus in eine fünfte Bewegungsrichtung entriegelt werden können und wobei dann die Greifvorrichtung entlang einer sechsten Bewegungsrichtung bewegt und dadurch in eine Trennungsposition verbracht werden kann.

Die vierte Bewegungsrichtung kann vertikal nach unten ausgerichtet und der dritten Bewegungsrichtung entgegengesetzt sein. Die fünfte Bewegungsrichtung kann vertikal nach oben und der zweiten Bewegungsrichtung entgegengesetzt sein. Die sechste Bewegungsrichtung kann horizontal und der ersten Bewegungsrichtung entgegengesetzt sein.

Die räumlichen Bezüge, die durch horizontal und vertikal angegeben sind, beziehen sich auch eine Betriebsanordnung der Elektrodenkappenbehandlungsvorrichtung, die im Allgemeinen auf einem ebenen, horizontal ausgerichteten Hallenboden angeordnet sein wird. In diesem Fall verläuft eine horizontale Ebene senkrecht zur Wirkrichtung der Schwerkraft und eine vertikale Ebene parallel zur Wirkrichtung der Schwerkraft.

### Kurze Figurenbeschreibung

Die beigefügten Figuren dienen zum besseren Verständnis und zur Veranschaulichung von Aspekten der Erfindung. Dabei zeigt:
Figur 1 eine schematische Ansicht der Komponenten einer Elektrodenkappenbehandlungsvorrichtung,
Figur 2 die Elektrodenkappenbehandlungsvorrichtung mit angedockter Elektrodenkappenbehandlungseinheit und Greifvorrichtung, die in eine Verbindungsposition verbracht wird,
Figur 3 eine Ausschnittsvergrößerung der Elektrodenkappenbehandlungsvorrichtung, wobei erster und zweiter Verriegelungsmechanismus verriegelt werden,
Figur 4 die Elektrodenkappenbehandlungsvorrichtung mit mittels des Verriegelungsmechanismus' verriegelten Elektrodenkappenbehandlungseinheit und Greifvorrichtung, die von der ortsfesten Andockstation abgedockt wurden,
Figur 5 die Elektrodenkappenbehandlungsvorrichtung mit mittels des Verriegelungsmechanismus' verriegelten Elektrodenkappenbehandlungseinheit und Greifvorrichtung, die auf die ortsfeste Andockstation angedockt werden,
Figur 6 eine Ausschnittsvergrößerung der Elektrodenkappenbehandlungsvorrichtung, wobei erster und zweiter Verriegelungsmechanismus entriegelt werden und
Figur 7 die Elektrodenkappenbehandlungsvorrichtung mit angedockter Elektrodenkappenbehandlungseinheit und der Greifvorrichtung, die in eine Trennungsposition verbracht wird.

### Figurenbeschreibung

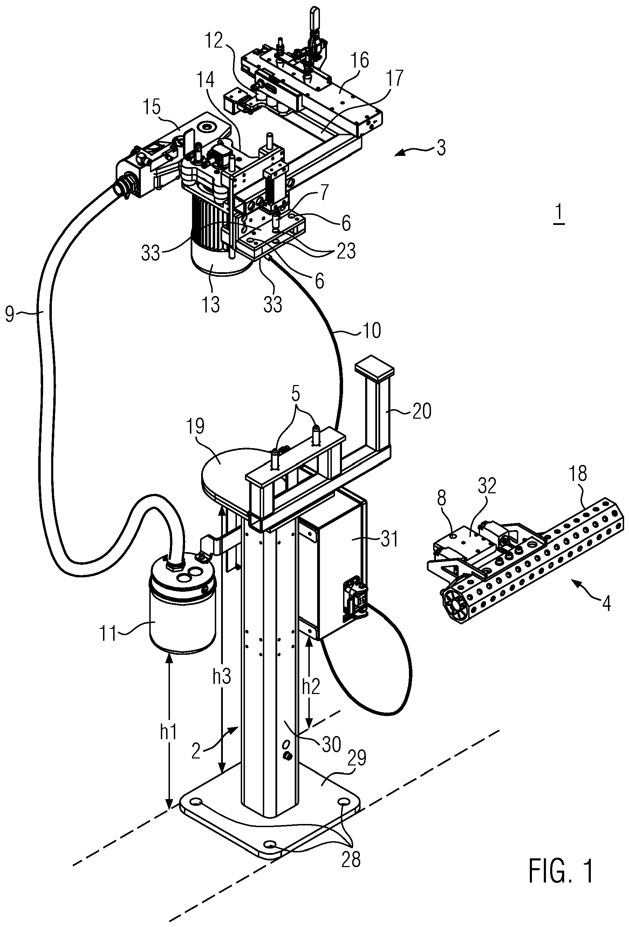

Die Figur 1 zeigt eine schematische Ansicht der Komponenten einer Elektrodenkappenbehandlungsvorrichtung 1, die eine Andockstation 2, eine Elektrodenkappenbehandlungseinheit 3 und eine Greifvorrichtung 4 umfasst.

Die Andockstation 2 umfasst beispielsweise eine Bodenplatte 29 mit (vier) Durchgangsbohrungen 28 (von denen drei zu sehen sind) und beispielsweise eine von der Bodenplatte ausgehende und sich dazu senkrecht erstreckende Säule 30. Mittels durch die Durchgangsbohrungen 28 eingebrachte Befestigungsmittel, wie Schrauben, Bodenanker oder dergleichen, kann die Andockstation 2 ortsfest angeordnet werden, beispielsweise auf und an einem Hallenboden einer Halle, in der die Elektrodenkappenbehandlungsvorrichtung 1 betrieben werden soll. Zum ortsfesten Anordnen können die durch die Durchgangsbohrungen 28 eingebrachten Befestigungsmittel in den Hallenboden eingeschraubt oder in ihm verankert werden.

Weiter umfasst die Andockstation 2 einen Spanbehälter 11 zur Aufnahme von durch die Elektrodenkappenbehandlungseinheit 3 von Elektrodenkappen 12 abgefräste Späne und eine Vorrichtung 31 zur Bereitstellung von Elektrizität. In der Darstellung befinden sich der Spanbehälter 11 und die Vorrichtung 31 beispielhaft jeweils seitlich an einem Ende der Säule 30, das dem Ende, an dem die Bodenplatte 29 angeordnet ist, entgegengesetzt ist. Der Spanbehälter 11 kann in einer Höhe h1 und die Vorrichtung 31 in einer Höhe h2 angeordnet sein; die Höhen können von der Unterseite der Bodenplatte 29 bzw. von einer Oberfläche, auf der die Andockstation 2 aufgestellt werden kann, jeweils bis zu einer Unterseite des Spanbehälters 11 und der Vorrichtung 31 gemessen werden.

In einer Höhe h3 ist eine Auflageplatte 19 an der Säule 30 angeordnet, auf der, wenn die Elektrodenkappenbehandlungseinheit 3 an der Andockstation 2 angedockt ist, die Elektrodenkappenbehandlungseinheit 3 zumindest teilweise in einem ersten Bereich der Elektrodenkappenbehandlungseinheit 3 aufliegen kann. Zudem umfasst die Andockstation 2 beispielhaft einen Auflagepfosten 20, auf dem, wenn die Elektrodenkappenbehandlungseinheit 3 an der Andockstation 2 angedockt ist, die Elektrodenkappenbehandlungseinheit 3 zumindest teilweise in einem zweiten Bereich Elektrodenkappenbehandlungseinheit 3 aufliegen kann.

Die Andockstation 2 umfasst eine elektrische Ausstattung und eine pneumatische Ausstattung zum Betreiben der Elektrodenkappenbehandlungseinheit 3. Die pneumatische Ausstattung umfasst einen Druckluftschlauch 9, der den Spanbehälter 11 und eine Spanansaugeinheit 15 der Elektrodenkappenbehandlungseinheit 3 verbindet. Die elektrische Ausstattung umfasst ein Elektrokabel 10, das die Vorrichtung 31 zur Bereitstellung von Elektrizität mit einem Elektromotor 13 der Elektrodenkappenbehandlungseinheit 3 verbindet.

Weiterhin umfasst die Andockstation 2 eine erste Andockvorrichtung 5, die hier beispielhaft als zwei Pins ausgebildet ist. Die erste Andockvorrichtung 5 und eine zweite Andockvorrichtung 6, die von der Elektrodenkappenbehandlungseinheit 3 umfasst ist, sind komplementär ausgebildet und ermöglichen ein Andocken und Abdocken der Elektrodenkappenbehandlungseinheit 3 an die und von der Andockstation 2. Die zweite Andockvorrichtung 6 ist beispielhaft in zwei beabstandet zueinander angeordnete Platten 33 als jeweils zwei Durchgangsbohrungen ausgebildet, in die und durch die hindurch die erste Andockvorrichtung 5 eingebracht bzw. aus der die erste Andockvorrichtung 5 ausgebracht werden kann; ein Teil der ersten Andockvorrichtung 5 kann in eingebrachtem Zustand aus den Durchgangsbohrungen hervorragen. In den beiden beabstandet zueinander angeordnete Platten 33 ist zudem jeweils eine Durchgangsbohrung 23 vorgesehen, in die und durch die hindurch ein erster Verriegelungsmechanismus 7 der Elektrodenkappenbehandlungseinheit 3 eingebracht bzw. aus der der erste Verriegelungsmechanismus 7 ausgebracht werden kann.

Die dargestellte Elektrodenkappenbehandlungseinheit 3 ist ausgebildet, Elektrodenkappen 12 zu fräsen und/oder auszutauschen und umfasst zudem eines oder mehrere von: eine Fräseinheit 14 zum Fräsen von Elektrodenkappen 12, eine Elektrodenkappenaustauscheinheit 16 zum Austauschen von Elektrodenkappen 12 und ein Elektrodenkappenmagazin 17 zum Bereitstellen von neuen Elektrodenkappen 12.

Der erste Verriegelungsmechanismus 7 ist ausgebildet, ein Verriegeln und Entriegeln der Elektrodenkappenbehandlungseinheit 3 mit und von einer Greifvorrichtung 4, die mit einem zweiten Verriegelungsmechanismus 8 ausgestattet ist, zu ermöglichen. Der erste Verriegelungsmechanismus 7 und der zweite Verriegelungsmechanismus 8 sind komplementär ausgebildet.

Der erste Verriegelungsmechanismus 7 umfasst beispielhaft einen beweglichen Pin und der zweite Verriegelungsmechanismus 8 eine entsprechende Durchgangsbohrung. Der erste Verriegelungsmechanismus 7 umfasst weiter zwei Platten mit jeweils einer Durchgangsbohrung, durch die hindurch der bewegliche Pin bewegbar ist. Beispielsweise kann der bewegliche Pin mittels eines Pneumatikzylinders antreibbar sein.

Die Greifvorrichtung 4 umfasst eine Greifstruktur 18, an der eine Platte 32 mit dem zweiten Verriegelungsmechanismus 8 angeordnet ist. Zudem kann die Greifvorrichtung 4 mindestens einen Sensor umfassen, der beispielsweise an dem zweiten Verriegelungsmechanismus angeordnet sein kann. Die Greifvorrichtung 4 kann z.B. von einem nicht dargestellten Greiforgan eines Industrieroboters ergriffen werden oder permanent mit ihm, beispielsweise fest, aber lösbar, verbunden sein.

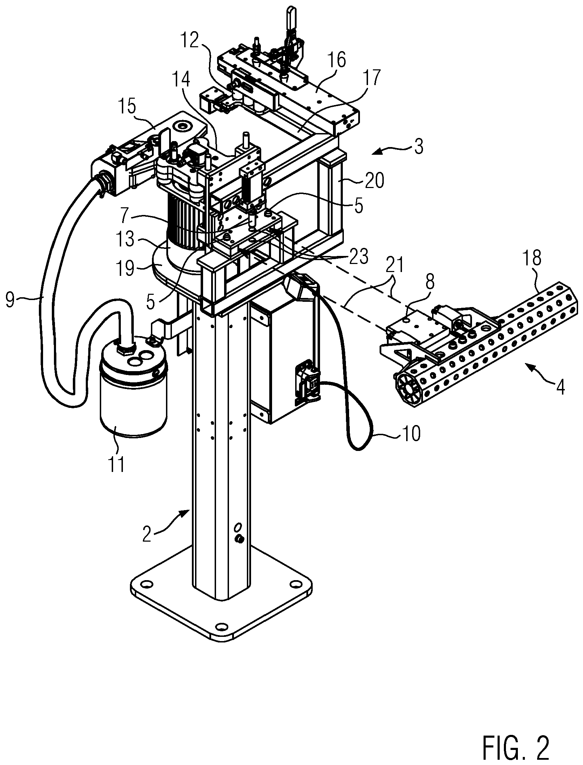

Die Figur 2 zeigt die Elektrodenkappenbehandlungsvorrichtung 1 mit der an der Andockstation 2 angedockten Elektrodenkappenbehandlungseinheit 3 und der Greifvorrichtung 4, die entlang der Bewegungsrichtung 21 in eine Verbindungsposition verbracht wird. Die Elektrodenkappenbehandlungseinheit 3 kann in den angedockten Zustand in einem vorausgegangenen Prozessschritt mittels der Greifvorrichtung 4 verbracht worden sein.

Durch ein Bewegen der Greifvorrichtung 4 entlang der Bewegungsrichtung 21 kann der zweite Verriegelungsmechanismus 8 derart in die angedockte Elektrodenkappenbehandlungseinheit 3 eingebracht werden, dass ein anschließendes Verriegeln der Greifvorrichtung 4 mit der Elektrodenkappenbehandlungseinheit 3 mittels des ersten und zweiten Verriegelungsmechanismus 7, 8 erfolgen kann.

Die Elektrodenkappenbehandlungseinheit 3 liegt zumindest im ersten Bereich auf der Auflageplatte 19 und liegt zumindest im zweiten Bereich auf dem Auflagepfosten 20 auf. Die zwei Pins der ersten Andockvorrichtung 5 sind in die zwei Durchgangsbohrungen der zweiten Andockvorrichtung 6 eingebracht, wobei ein Teil der ersten Andockvorrichtung 5 im eingebrachtem Zustand aus den Durchgangsbohrungen hervorragt.

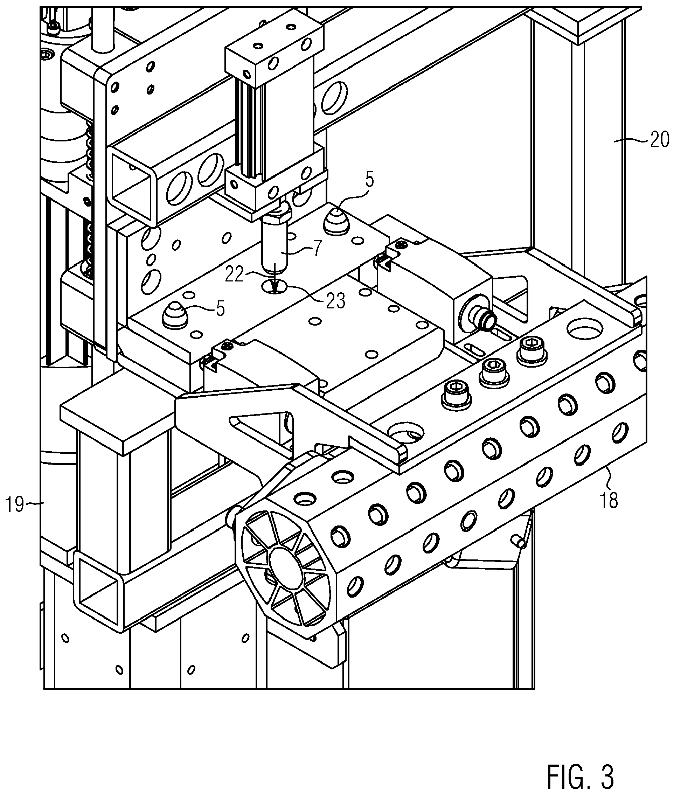

Die Figur 3 zeigt eine Ausschnittsvergrößerung der Elektrodenkappenbehandlungsvorrichtung 1, wobei der erste und zweite Verriegelungsmechanismus 7, 8 verriegelt werden. Die Greifvorrichtung 4 wurde entlang der Bewegungsrichtung 21 in eine Verbindungsposition verbracht, wodurch der erste und zweite Verriegelungsmechanismus 7, 8 derart relativ zueinander angeordnet sind, dass durch ein Verbringen des ersten Verriegelungsmechanismus' 7 entlang der Bewegungsrichtung 22 ein Verriegeln des ersten und zweiten Verriegelungsmechanismus' 7, 8 erfolgen kann. Der erste Verriegelungsmechanismus 7 wird zum Verriegeln durch die eine der Durchgangsbohrungen 23 in der einen Platte 33 der Elektrodenkappenbehandlungseinheit 3, durch den zweiten Verriegelungsmechanismus 8 und durch die andere der Durchgangsbohrungen 23 in der anderen Platte 33 hindurchbewegt. Beispielsweise kann der erste Verriegelungsmechanismus 7 arretiert werden.

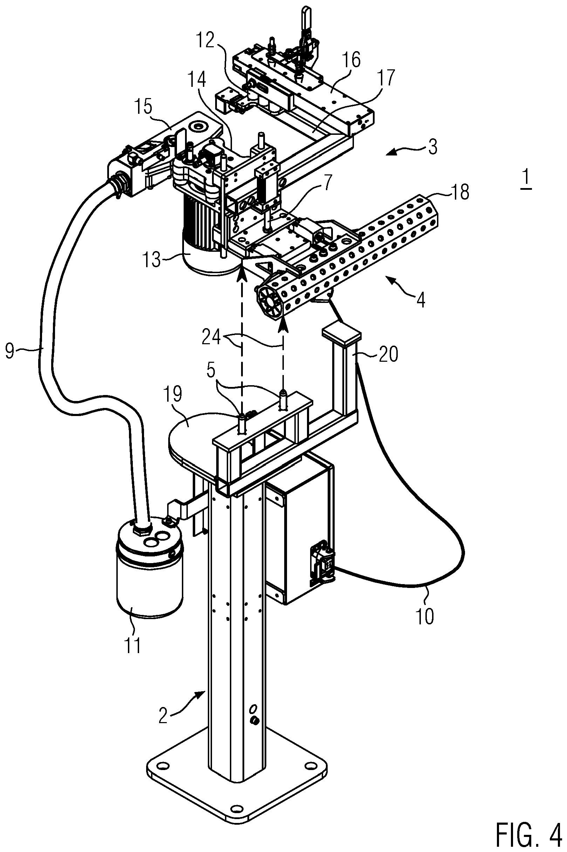

Die Figur 4 zeigt die Elektrodenkappenbehandlungsvorrichtung 1 mit mittels des ersten und zweiten Verriegelungsmechanismus' 7, 8 miteinander verriegelter Elektrodenkappenbehandlungseinheit 3 und Greifvorrichtung 4, wobei die miteinander verriegelten Elektrodenkappenbehandlungseinheit 3 und Greifvorrichtung 4 von der Andockstation 2 durch ein Verbringen in eine Bewegungsrichtung 24 abgedockt wurden. Das Verbringen in die Bewegungsrichtung 24 kann mittels der Greifvorrichtung 4 erfolgen, die beispielsweise von einem nicht dargestellten Greiforgan eines Industrieroboters ergriffen ist und mittels des Industrieroboters bewegt werden kann. Nachdem die miteinander verriegelte Elektrodenkappenbehandlungseinheit 3 und Greifvorrichtung 4 von der Andockstation 2 abgedockt wurden, können diese in beliebige Raumrichtungen bewegt werden, so dass eine Verwendung der Elektrodenkappenbehandlungseinheit 3 zum Fräsen und/oder Auszutauschen von Elektrodenkappen 12 möglich ist.

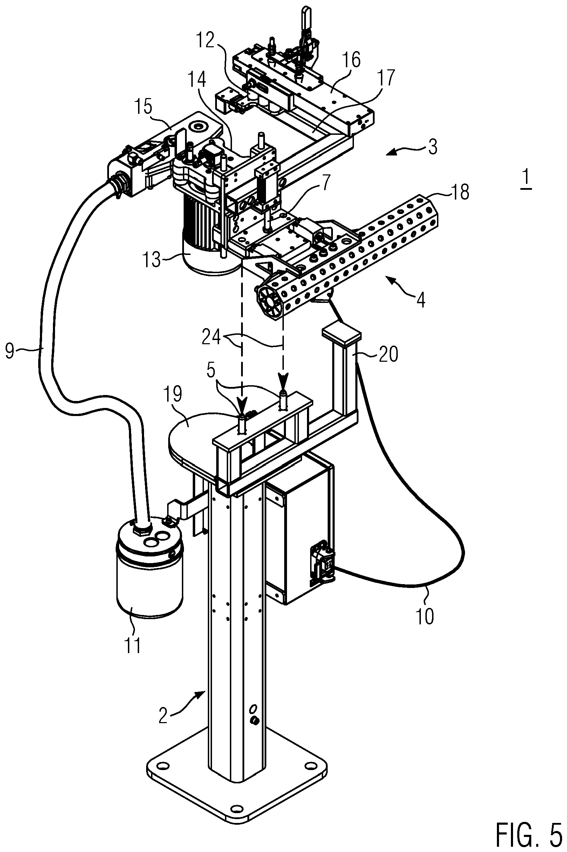

Die Figur 5 zeigt die Elektrodenkappenbehandlungsvorrichtung 1 der Figur 4, wobei die miteinander verriegelte Elektrodenkappenbehandlungseinheit 3 und Greifvorrichtung 4 durch ein Verbringen in eine Bewegungsrichtung 25 auf der Andockstation 2 angedockt werden. Die Elektrodenkappenbehandlungseinheit 3 wird dabei auf die Andockstation 2 abgesenkt, so dass die zweite Andockvorrichtung 6 die erste Andockvorrichtung 5 aufnehmen kann. Nach dem Andocken ist dann die erste Andockvorrichtung 5 in und durch die jeweiligen Durchgangsbohrungen der zweiten Andockvorrichtung 6 in den beiden Platten 32 eingebracht.

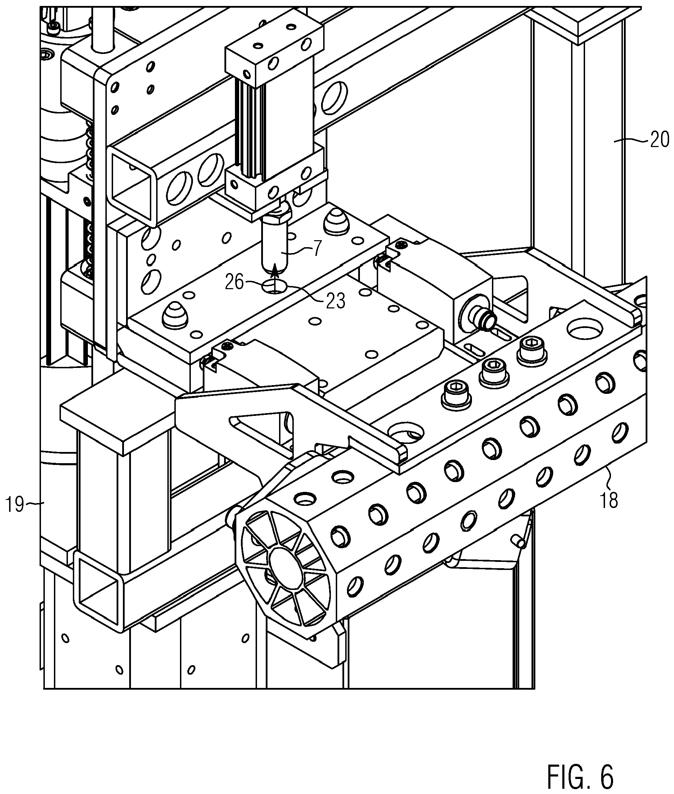

Die Figur 6 zeigt eine Ausschnittsvergrößerung der Elektrodenkappenbehandlungsvorrichtung 1, wobei der erste und zweite Verriegelungsmechanismus 7, 8 entriegelt werden. Dazu kann beispielsweise zunächst der erste Verriegelungsmechanismus 7 gelöst werden.

Zum Entriegeln wird der erste Verriegelungsmechanismus 7 durch die andere der Durchgangsbohrungen 23 in der anderen Platte 33 der Elektrodenkappenbehandlungseinheit 3, durch den zweiten Verriegelungsmechanismus 8 und durch die eine der Durchgangsbohrungen 23 in der einen Platte 33 in die Bewegungsrichtung 26 herausbewegt.

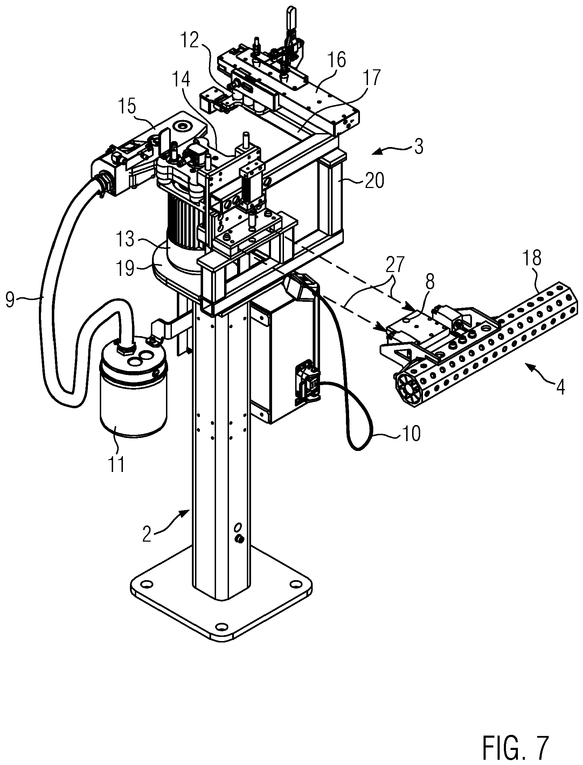

Die Figur 7 zeigt die Elektrodenkappenbehandlungsvorrichtung 1 mit angedockter Elektrodenkappenbehandlungseinheit 3 und der Greifvorrichtung 4, die in eine Trennungsposition verbracht wird. Nach dem Entriegeln wird die Greifvorrichtung 4 entlang der Bewegungsrichtung 27 bewegt und dadurch in die Trennungsposition verbracht.

## Patentansprüche

1. Elektrodenkappenbehandlungsvorrichtung umfassend:
eine Andockstation (2), die ortsfest angeordnet werden kann, mit einer ersten Andockvorrichtung (5),
eine Elektrodenkappenbehandlungseinheit (3) mit einer zweiten Andockvorrichtung (6) und
einem ersten Verriegelungsmechanismus (7), wobei die Elektrodenkappenbehandlungseinheit (3) ausgebildet ist, Elektrodenkappen (12) zu fräsen und/oder Elektrodenkappen (12) auszutauschen,
wobei die erste Andockvorrichtung (5) und die zweite Andockvorrichtung (6) komplementär ausgebildet sind und ein Andocken und Abdocken der Elektrodenkappenbehandlungseinheit (3) an die und von der Andockstation (2) ermöglichen und
wobei der erste Verriegelungsmechanismus (7) ausgebildet ist, ein Verriegeln und Entriegeln der Elektrodenkappenbehandlungseinheit (3) mit und von einer Greifvorrichtung (4), die mit einem zweiten Verriegelungsmechanismus (8) ausgestattet ist, zu ermöglichen, wofür der erste und der zweite Verriegelungsmechanismus (8) komplementär ausgebildet sind.

2. Die Elektrodenkappenbehandlungsvorrichtung nach Anspruch 1, wobei die Andockstation (2) eine elektrische Ausstattung und eine pneumatische Ausstattung zum Betreiben der Elektrodenkappenbehandlungseinheit (3) umfasst.

3. Die Elektrodenkappenbehandlungsvorrichtung nach Anspruch 2, wobei die elektrische Ausstattung und die pneumatische Ausstattung die Andockstation (2) und die Elektrodenkappenbehandlungseinheit (3) flexibel miteinander verbindet.

4. Die Elektrodenkappenbehandlungsvorrichtung nach Anspruch 2 oder 3, wobei die pneumatische Ausstattung einen Druckluftschlauch (9) umfasst, wobei beispielsweise der Druckluftschlauch (9) in einem Schutzschlauch angeordnet ist.

5. Die Elektrodenkappenbehandlungsvorrichtung nach einem der Ansprüche 2 bis 4, wobei die elektrische Ausstattung ein Elektrokabel (10) umfasst, wobei beispielsweise das Elektrokabel (10) in einem Schutzschlauch angeordnet ist.

6. Die Elektrodenkappenbehandlungsvorrichtung nach einem der Ansprüche 1 bis 5, wobei die Andockstation (2) einen Spanbehälter (11) umfasst.

7. Die Elektrodenkappenbehandlungsvorrichtung nach einem der Ansprüche 1 bis 6, wobei die Elektrodenkappenbehandlungseinheit (3) einen Elektromotor (13) und/oder eine Fräseinheit (14) und/oder eine Spanansaugeinheit (15) und/oder eine Elektrodenkappenaustauscheinheit (16) und/oder ein Elektrodenkappenmagazin (17) umfasst.

8. Die Elektrodenkappenbehandlungsvorrichtung nach einem der Ansprüche 1 bis 7, wobei die erste Andockvorrichtung (5) als ein Pin oder als mehre Pins und die zweite Andockvorrichtung (6) als entsprechend eine Durchgangsbohrung oder als entsprechend mehre Durchgangsbohrungen ausgebildet sind oder wobei die erste Andockvorrichtung als eine Durchgangsbohrung oder als mehre Durchgangsbohrungen und die zweite Andockvorrichtung als entsprechend ein Pin oder als entsprechend mehre Pins ausgebildet sind.

9. Die Elektrodenkappenbehandlungsvorrichtung nach einem der Ansprüche 1 bis 8, wobei der erste Verriegelungsmechanismus (7) einen beweglichen Pin und der zweite Verriegelungsmechanismus (8) eine entsprechende Durchgangsbohrung umfasst, wobei beispielsweise der erste Verriegelungsmechanismus (7) weiter mindestens eine Platte mit einer Durchgangsbohrung umfasst, durch die hindurch der bewegliche Pin bewegbar ist, wobei beispielsweise der bewegliche Pin mittels eines Pneumatikzylinders antreibbar ist.

10. Die Elektrodenkappenbehandlungsvorrichtung nach einem der Ansprüche 1 bis 9, wobei der zweite Verriegelungsmechanismus (8) mindestens einen Sensor umfasst.

11. Die Elektrodenkappenbehandlungsvorrichtung (1) nach einem der Ansprüche 1 bis 10 weiter umfassend die Greifvorrichtung (4).

12. Verfahren zum Betreiben einer Elektrodenkappenbehandlungsvorrichtung nach einem der Ansprüche 1 bis 11.

13. Das Verfahren nach Anspruch 12, wobei die Greifvorrichtung (4) entlang einer ersten Bewegungsrichtung (21) in eine Verbindungsposition verbracht wird, wobei dadurch der zweite Verriegelungsmechanismus (8) derart in die in einem angedockten Zustand auf der Andockstation (2) befindliche Elektrodenkappenbehandlungseinheit (3) eingebracht wird, dass ein anschließendes Verriegeln der Greifvorrichtung (4) mit der Elektrodenkappenbehandlungseinheit (3) mittels des ersten Verriegelungsmechanismus' (7) und des zweiten Verriegelungsmechanismus' (8) ausführbar ist; und ein Verriegeln des ersten und zweiten Verriegelungsmechanismus' (7, 8), und damit der Elektrodenkappenbehandlungseinheit 3 und der Greifvorrichtung (4), durch ein Verbringen des ersten Verriegelungsmechanismus' (7) entlang einer zweiten Bewegungsrichtung (22) erfolgt.

14. Das Verfahren nach Anspruch 13, wobei die miteinander verriegelten Elektrodenkappenbehandlungseinheit (3) und Greifvorrichtung (4) von der Andockstation (2) durch ein Verbringen in eine dritte Bewegungsrichtung (24) abgedockt werden und anschließend eine Verwendung der Elektrodenkappenbehandlungseinheit (3) zum Fräsen und/oder Auszutauschen von Elektrodenkappen (12) stattfindet.

15. Das Verfahren nach Anspruch 14, wobei die miteinander verriegelte Elektrodenkappenbehandlungseinheit (3) und die Greifvorrichtung (4) durch ein Verbringen in eine vierte Bewegungsrichtung (25) auf der Andockstation (2) angedockt werden, wobei der erste und zweite Verriegelungsmechanismus (7, 8) durch ein Bewegen des ersten Verriegelungsmechanismus (7) in eine fünfte Bewegungsrichtung (26) entriegelt werden und wobei dann die Greifvorrichtung (4) entlang einer sechsten Bewegungsrichtung (27) bewegt und dadurch in eine Trennungsposition verbracht wird.

## Geänderte Patentansprüche

### Geänderte Patentansprüche gemäss Regel 137(2) EPÜ.

1. Elektrodenkappenbehandlungsvorrichtung mit einer Elektrodenkappenbehandlungseinheit (3), **gekennzeichnet durch**:
eine Andockstation (2), die ortsfest angeordnet werden kann, mit einer ersten Andockvorrichtung (5), wobei die Andockstation (2) eine elektrische Ausstattung und eine pneumatische Ausstattung zum Betreiben der Elektrodenkappenbehandlungseinheit (3) umfasst, wobei die elektrische Ausstattung und die pneumatische Ausstattung die Andockstation (2) und die Elektrodenkappenbehandlungseinheit (3) flexibel miteinander verbindet,
die Elektrodenkappenbehandlungseinheit (3) mit einer zweiten Andockvorrichtung (6) und einem ersten Verriegelungsmechanismus (7), wobei die Elektrodenkappenbehandlungseinheit (3) ausgebildet ist, Elektrodenkappen (12) zu fräsen und/oder Elektrodenkappen (12) auszutauschen,
wobei die erste Andockvorrichtung (5) und die zweite Andockvorrichtung (6) komplementär ausgebildet sind und ein Andocken und Abdocken der Elektrodenkappenbehandlungseinheit (3) an die und von der Andockstation (2) ermöglichen und
wobei der erste Verriegelungsmechanismus (7) ausgebildet ist, ein Verriegeln und Entriegeln der Elektrodenkappenbehandlungseinheit (3) mit und von einer Greifvorrichtung (4), die mit einem zweiten Verriegelungsmechanismus (8) ausgestattet ist, zu ermöglichen, wofür der erste und der zweite Verriegelungsmechanismus (8) komplementär ausgebildet sind.

2. Die Elektrodenkappenbehandlungsvorrichtung nach Anspruch 1, wobei die pneumatische Ausstattung einen Druckluftschlauch (9) umfasst, wobei beispielsweise der Druckluftschlauch (9) in einem Schutzschlauch angeordnet ist.

3. Die Elektrodenkappenbehandlungsvorrichtung nach einem der Ansprüche 1 bis 2, wobei die elektrische Ausstattung ein Elektrokabel (10) umfasst, wobei beispielsweise das Elektrokabel (10) in einem Schutzschlauch angeordnet ist.

4. Die Elektrodenkappenbehandlungsvorrichtung nach einem der Ansprüche 1 bis 3, wobei die Andockstation (2) einen Spanbehälter (11) umfasst.

5. Die Elektrodenkappenbehandlungsvorrichtung nach einem der Ansprüche 1 bis 4, wobei die Elektrodenkappenbehandlungseinheit (3) einen Elektromotor (13) und/oder eine Fräseinheit (14) und/oder eine Spanansaugeinheit (15) und/oder eine Elektrodenkappenaustauscheinheit (16) und/oder ein Elektrodenkappenmagazin (17) umfasst.

6. Die Elektrodenkappenbehandlungsvorrichtung nach einem der Ansprüche 1 bis 5, wobei die erste Andockvorrichtung (5) als ein Pin oder als mehre Pins und die zweite Andockvorrichtung (6) als entsprechend eine Durchgangsbohrung oder als entsprechend mehre Durchgangsbohrungen ausgebildet sind oder wobei die erste Andockvorrichtung als eine Durchgangsbohrung oder als mehre Durchgangsbohrungen und die zweite Andockvorrichtung als entsprechend ein Pin oder als entsprechend mehre Pins ausgebildet sind.

7. Die Elektrodenkappenbehandlungsvorrichtung nach einem der Ansprüche 1 bis 6, wobei der erste Verriegelungsmechanismus (7) einen beweglichen Pin und der zweite Verriegelungsmechanismus (8) eine entsprechende Durchgangsbohrung umfasst, wobei beispielsweise der erste Verriegelungsmechanismus (7) weiter mindestens eine Platte mit einer Durchgangsbohrung umfasst, durch die hindurch der bewegliche Pin bewegbar ist, wobei beispielsweise der bewegliche Pin mittels eines Pneumatikzylinders antreibbar ist.

8. Die Elektrodenkappenbehandlungsvorrichtung nach einem der Ansprüche 1 bis 7, wobei der zweite Verriegelungsmechanismus (8) mindestens einen Sensor umfasst.

9. Die Elektrodenkappenbehandlungsvorrichtung (1) nach einem der Ansprüche 1 bis 8 weiter umfassend die Greifvorrichtung (4).

10. Verfahren zum Betreiben einer Elektrodenkappenbehandlungsvorrichtung nach einem der Ansprüche 1 bis 9.

11. Das Verfahren nach Anspruch 10, wobei die Greifvorrichtung (4) entlang einer ersten Bewegungsrichtung (21) in eine Verbindungsposition verbracht wird, wobei dadurch der zweite Verriegelungsmechanismus (8) derart in die in einem angedockten Zustand auf der Andockstation (2) befindliche Elektrodenkappenbehandlungseinheit (3) eingebracht wird, dass ein anschließendes Verriegeln der Greifvorrichtung (4) mit der Elektrodenkappenbehandlungseinheit (3) mittels des ersten Verriegelungsmechanismus' (7) und des zweiten Verriegelungsmechanismus' (8) ausführbar ist; und ein Verriegeln des ersten und zweiten Verriegelungsmechanismus' (7, 8), und damit der Elektrodenkappenbehandlungseinheit 3 und der Greifvorrichtung (4), durch ein Verbringen des ersten Verriegelungsmechanismus' (7) entlang einer zweiten Bewegungsrichtung (22) erfolgt.

12. Das Verfahren nach Anspruch 11, wobei die miteinander verriegelten Elektrodenkappenbehandlungseinheit (3) und Greifvorrichtung (4) von der Andockstation (2) durch ein Verbringen in eine dritte Bewegungsrichtung (24) abgedockt werden und anschließend eine Verwendung der Elektrodenkappenbehandlungseinheit (3) zum Fräsen und/oder Auszutauschen von Elektrodenkappen (12) stattfindet.

13. Das Verfahren nach Anspruch 12, wobei die miteinander verriegelte Elektrodenkappenbehandlungseinheit (3) und die Greifvorrichtung (4) durch ein Verbringen in eine vierte Bewegungsrichtung (25) auf der Andockstation (2) angedockt werden, wobei der erste und zweite Verriegelungsmechanismus (7, 8) durch ein Bewegen des ersten Verriegelungsmechanismus (7) in eine fünfte Bewegungsrichtung (26) entriegelt werden und wobei dann die Greifvorrichtung (4) entlang einer sechsten Bewegungsrichtung (27) bewegt und dadurch in eine Trennungsposition verbracht wird.
